# EUROPEAN PATENT APPLICATION

(11) **EP 4 685 954 A1**
(43) Date of publication of application: **28.01.2026**
(21) Application number: 25191233.3
(22) Date of filing: 23.07.2025
(51) Int. Cl.: H01M 50/213, H01M 50/244, H01M 50/247, H01M 50/289, H01M 50/291, H01M 50/293, H01M 50/503, H01M 50/505, H01M 50/516

(54) **BATTERY PACK AND METHOD FOR MANUFACTURING A BATTERY PACK**

(30) Priority: 23.07.2024 US 202418781321
(71) Applicant: Techtronic Cordless GP, Anderson, SC 29621 (US)
(72) Inventor: LI, Sheng Ping, Dongguan City, Guangdong Province (CN); BROWN, Patrick, Anderson, SC, 29621 (US)
(74) Representative: Meissner Bolte Partnerschaft mbB

(57) **Abstract**

A battery pack including a housing having an interface for receiving an electronic device. A cell carrier is positioned with the housing. The cell carrier includes a plurality of openings. Each of the openings are configured to receive one of a plurality of battery cells. The battery pack further includes a weld strap having a plurality of contact elements configured to be electrically coupled to an electrical terminal of each battery cell. A panel is positioned between the weld strap and the cell carrier. The panel configured to align the electrical terminals of each battery cell within the respective openings.

## Description

### FIELD

The present disclosure relates to a battery pack. In particular, a battery pack with one or more weld strap positioning supports.

### SUMMARY

Typically, battery packs that include a plurality of battery cells have a cell strap to electrically couple the battery cells to one another. The cell straps are typically welded to an electric terminal of each battery cell to maintain connection throughout the lifespan of the battery pack. During assembly of the battery pack, it is often difficult for a manufacturer to accurately place the cell strap on the electric terminals prior to welding.

The present disclosure provides, in one aspect, a battery pack including a housing having an interface for receiving an electronic device. A cell carrier is positioned with the housing. The cell carrier includes a plurality of openings. Each of the openings are configured to receive one of a plurality of battery cells. The battery pack further includes a weld strap having a plurality of contact elements configured to be electrically coupled to an electrical terminal of each battery cell. A panel is positioned between the weld strap and the cell carrier. The panel is configured to align the electrical terminals of each battery cell within the respective openings.

In some embodiments, the panel may include a plurality of projections extending towards the openings.

In some embodiments, a portion of the battery cells may extend through the openings and the projections may engage the portion of the battery cells.

In some embodiments, the panel may include an abutment extending radially inward towards a battery cell axis defined by the battery cells.

In some embodiments, the battery cells may engage the abutment to prevent axial movement of the battery cells about the battery cell axis.

In some embodiments, the battery cells may define a first diameter and the abutment may define a second diameter and the second diameter may be less than the first diameter.

In some embodiments, the panel may include a corresponding plurality of openings to align with the openings of the cell carrier. The contact elements may be positioned in the corresponding openings to engage the electrical terminals of each battery cell.

In some embodiments, the panel may be comprised of a first material and the cell carrier may be comprised of a second material. The first material may be the same as the second material.

In some embodiments, the contact elements may be contact resistance welded to the electrical terminals of the battery cells.

The present disclosure provides, in one aspect, a battery pack including a housing having an interface for receiving an electronic device. A cell carrier is positioned within the housing. The cell carrier includes a plurality of openings. Each of the openings are configured to receive one of a plurality of battery cells. The battery pack further includes a weld strap having a plurality of contact elements configured to be electrically coupled to an electrical terminal of each battery cell. A panel is positioned between the weld strap and the cell carrier. The panel includes a plurality of ribs and a plurality of protrusions extending from the ribs. The protrusions extend through the weld strap to maintain a separation between each contact element.

In some embodiments, the panel may include a plurality of corresponding openings configured to align with the opening of the cell carrier. The ribs may be positioned between the corresponding openings.

In some embodiments, the weld strap may include a plurality of apertures extending through the weld strap. The protrusions are configured to extend through the apertures.

In some embodiments, the contact elements may be welded to the electrical terminals of each battery cell. The protrusions may provide support for the weld strap prior to welding.

In some embodiments, the panel may include a fastener hole extending through the ribs to align with a corresponding fastener hole on the cell carrier. A fastener may be received into the fastener hole and the corresponding fastener hole to couple the panel to the cell carrier.

The present disclosure provides, in one aspect, a method for manufacturing a battery pack. The method includes providing a housing having an interface for receiving an electronic device. A cell carrier is provided having a plurality of openings. A plurality of battery cells are inserted into the opening. Each battery cell having electric terminals. A weld strap is provided with a plurality of contact elements. A panel is secured to the cell carrier. The panel is positioned between the weld strap and the cell carrier. The panel is configured to align the electrical terminals of each battery cell within the respective openings. The contact elements are welded to the electric terminals of each battery cell. The cell carrier is inserted into the housing.

In some embodiments, the panel may include a plurality of ribs and a plurality of protrusions extending from the ribs.

In some embodiments, the weld strap may include a plurality of apertures extending through the weld strap.

In some embodiments, the method may further comprise positioning the plurality of protrusions through the apertures of the weld strap to maintain a separation between each contact element.

In some embodiments, the contact elements may be contact resistance welded to the electric terminals of each battery cell.

In some embodiments, the panel may be secured to the cell carrier via a fastener extending through the panel and into the cell carrier.

Other features and aspects of the invention will become apparent by consideration of the following detailed description and accompanying drawings.

### BRIEF DESCRIPTION OF THE DRAWINGS

FIG. 1 is a perspective view of a battery pack including a housing according to some embodiments.
FIG. 2 is a cross-sectional view of the battery pack through section line 2-2 of FIG. 1 according to some embodiments.
FIG. 3 is a cross-sectional view of the battery pack through section line 3-3 of FIG. 1 according to some embodiments.
FIG. 4 is a perspective view of the battery pack of FIG. 1 with the housing removed according to some embodiments.
FIG. 5 is a perspective view of a cell carrier of the battery pack of FIG. 1 according to some embodiments.
FIG. 6 is a perspective view of a panel of the battery pack of FIG. 1 according to some embodiments.
FIG. 7 is a side view of the battery pack of FIG. 1 according to some embodiments.
FIG. 8a is a front view of a weld strap for use with the battery pack of FIG. 1 according to some embodiments.
FIG. 8b is a front view of another weld strap for use with the battery pack of FIG. 1 according to some embodiments.
FIG. 8c is a front view of another weld strap for use with the battery pack of FIG. 1 according to some embodiments.
FIG. 9 is a flow chart illustrating a method for manufacturing the battery pack of FIG. 1 according to some embodiments.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

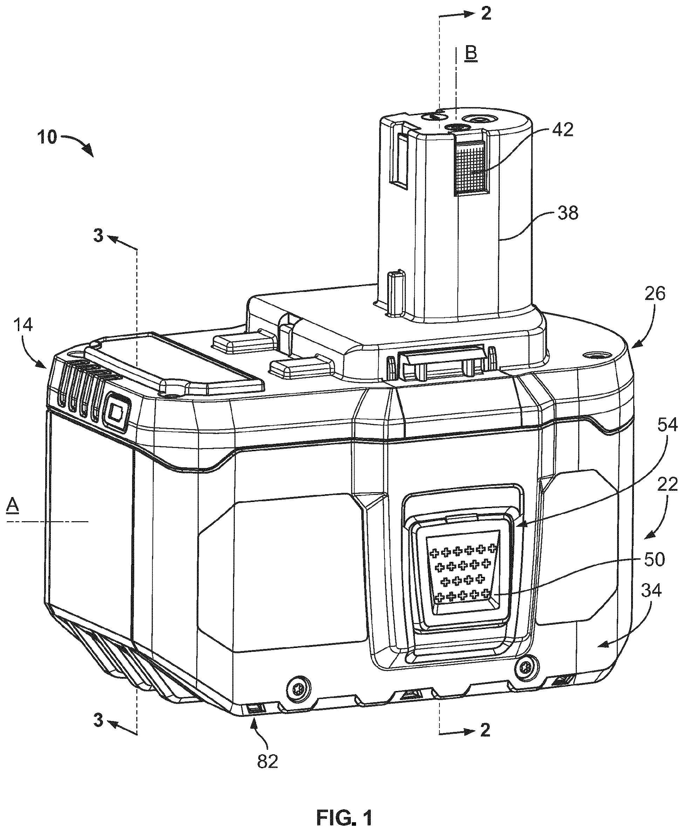

FIGS. 1-4 illustrate a rechargeable battery pack 10 for use with an electronic device (such as but not limited to a power tool, outdoor power equipment, lighting, electronic accessories, etc.) (not shown) according to some embodiments. The battery pack 10 includes a housing 14 having a plurality of battery cells 18 positioned therein. The battery cells 18 are configured to supply electrical current to the electronic device, as described in further detail later. The housing 14 includes a base portion 22 and a connecting portion 26 extending from the base portion 22. The base portion 22 of the housing 14 is substantially rectangular in shape having a bottom wall 30 and a plurality of sidewalls 34 extending from the bottom wall 30. The housing 14 defines a central axis A extending longitudinally through the base portion 22.

The connecting portion 26 is coupled to the base portion 22 and extends upwardly (e.g., away from the central axis A) from the base portion 22. The connecting portion 26 includes a tower 38 having one or more electrical contacts 42 configured to interface with a battery pack receptacle (not shown) of the electronic device. The tower 38 defines an axis B perpendicular to the central axis A. The connecting portion 26 supplies electricity from the battery cells 18 to the electronic device via the electrical contacts 42. The battery pack 10 is removably secured to the electronic device via a latching mechanism 46. Although illustrated as a stem-type battery pack, in other embodiments, battery pack 10 may be a rail-type battery pack.

FIGS. 1-2 illustrate the latching mechanism 46 for the battery pack 10 according to some embodiments. The battery pack 10 includes two (2) latching mechanisms 46 positioned on the opposing sidewalls 34 of the base portion 22 of the battery pack 10 and are substantially similar in layout and operation. As such, only one latching mechanism 46 will be described in detail herein. The latching mechanism 46 includes a button 50 positioned in an opening 54 in the sidewall 34 of the base portion 22. The button 50 is configured to be depressed by the user to partially recess into the housing 14. In the illustrated embodiment, the button 50 is biased away from the central axis A by a biasing strap 58. In some embodiments, the biasing strap 58 is comprised of a deformable and elastic material that is deformed when the user depresses the button 50. The biasing strap 58 acts as a spring element to bias the button 50 to a resting position. In other embodiments, the button 50 may be biased by a spring (e.g., helical or coiled spring).

The latching mechanism 46 further includes a linkage member 62 and a locking pawl 66 coupled to the linkage member 62. The pawl 66 is configured to selectively engage a corresponding locking aperture (not shown) of the battery pack receptacle of the electronic device. The latching mechanism 46 is adjustable between a locked position, in which the battery pack 10 is secured to the electronic device, and an unlocked position, in which the battery pack 10 is removeable from the electronic device.

The button 50 is in operable communication with the pawl 66 through the linkage member 62. The linkage member 62 is an elongated piece of resiliently deformable material having a first end 70 coupled to the base portion 22 of the housing 14 and a second end 74, opposite the first end 70, and directly coupled to the pawl 66. The pawl 66 is generally L-shaped and includes a tooth 78 sized and shaped to engage the corresponding locking aperture.

During use, the user grips the battery pack 10 coupled to the electronic device for removal therefrom. The user depresses the button 50 to deform the linkage member 62 and move the pawl 66. When the user depresses the button 50, the pawl 66 is moved towards the central axis A of the base portion 22 of the battery pack 10. The tooth 78 of the pawl 66 is thereby separated from the corresponding locking aperture of the battery pack receptacle of the electronic device. The user may then remove the battery pack 10 from the electronic device about the axis B in a first direction 84. To couple the battery pack 10 with the electronic device, the user inserts the tower 38 into the battery pack receptacle about the axis B in a second direction 86 opposite the first direction 84. The pawl 66 engages the corresponding locking aperture to automatically bias the pawl 66 towards the central axis A. The tower 38 continues into the battery pack receptacle until the electrical contacts 42 are in electrical communication with the electronic device. At this point, the tooth 78 of the pawl 66 engages the corresponding locking aperture, thereby axially securing the battery pack 10 to the electronic device about axis B.

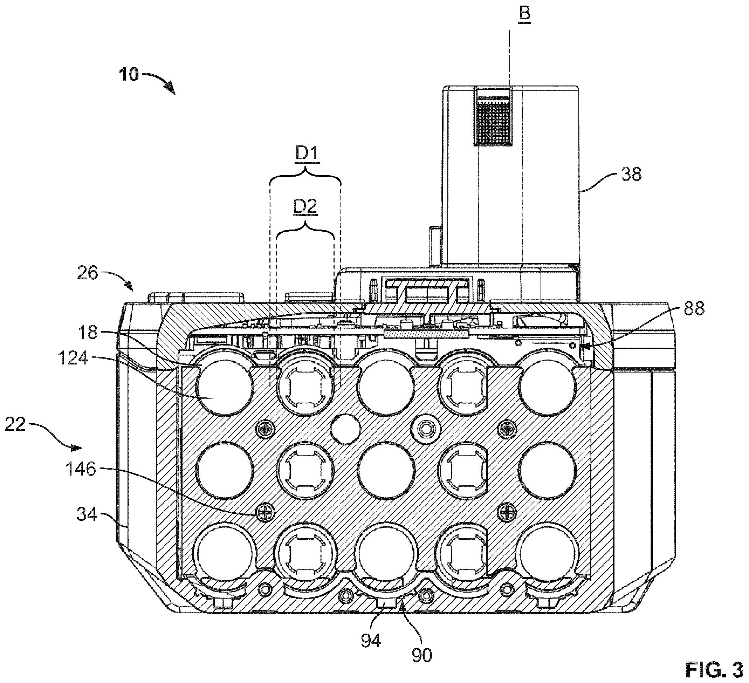

With reference to FIGS. 1 and 3, the battery pack 10 includes a plurality of drainage holes 82 positioned in the sidewalls 34 of the housing 14. The drainage holes 82 are in fluid communication with an internal cavity 88 of the housing 14 and facilitate the removal of fluid from the battery pack 10. Each drainage hole 82 is funneled fluid by a collection groove 90 positioned below the battery cells 18 along the axis B. The collection groove 90 receives fluid that may have entered the housing 14 during general use. The collection groove 90 may also collect condensation formed on the battery cells 18. The condensation may drip off the battery cells 18 and into the collection groove 90 or directly into a collection receptacle 94. The fluid entering the collection groove 90 is funneled to the collection receptacle 94 positioned below the collection groove 90 along the axis B. The collection receptacle 94 is fluidly connected to the drainage hole 82 through the sidewall 34 of the base portion 22. The fluid may exit the housing 14 through the drainage hole 82. The drainage holes 82 allow fluid that may collect inside of the housing 14 to exit, thereby prolonging the life of the battery cells 18.

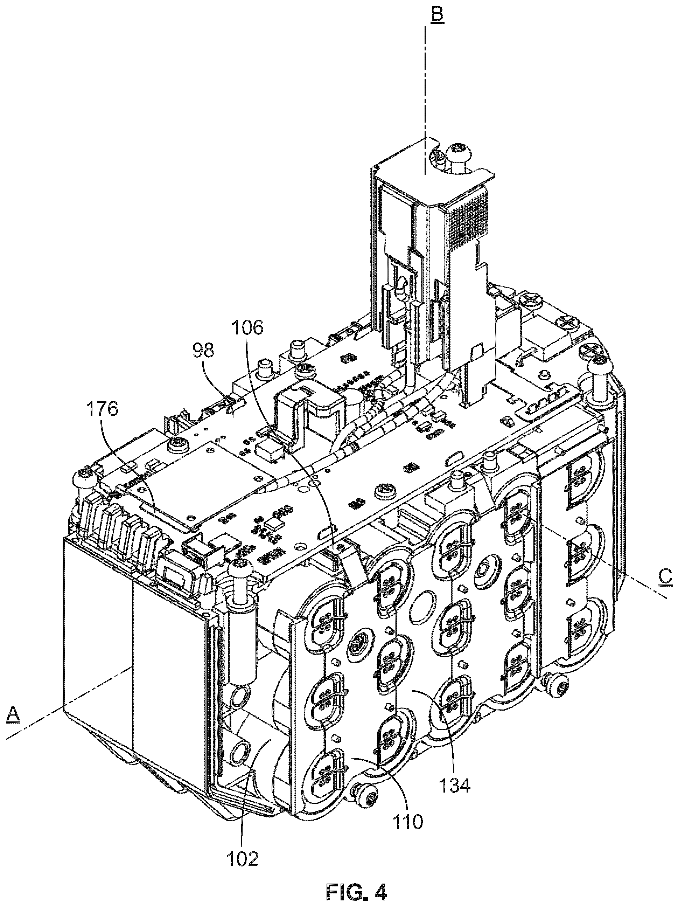

With reference to FIG. 4, the battery pack 10 includes a printed circuit board (PCB) 98 coupled to a cell carrier 102 that secures the battery cells 18 within the housing 14. The PCB 98 controls operations of the battery pack 10 such as charging, temperature regulation, supplying electricity, or the like. The PCB 98 is configured to receive electricity from the battery cells 18 and supply the electricity to the electrical contacts 42 (See FIG. 1) on the tower 38. The PCB 98 is electrically coupled to a plurality of arms 106 extending from a plurality of weld straps 110 in contact with the battery cells 18, as described in detail later.

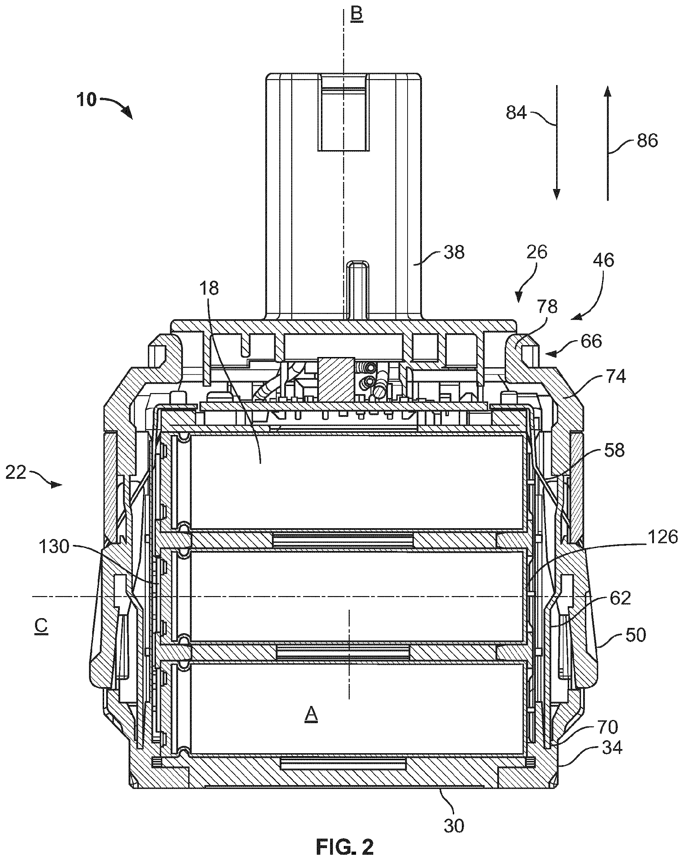

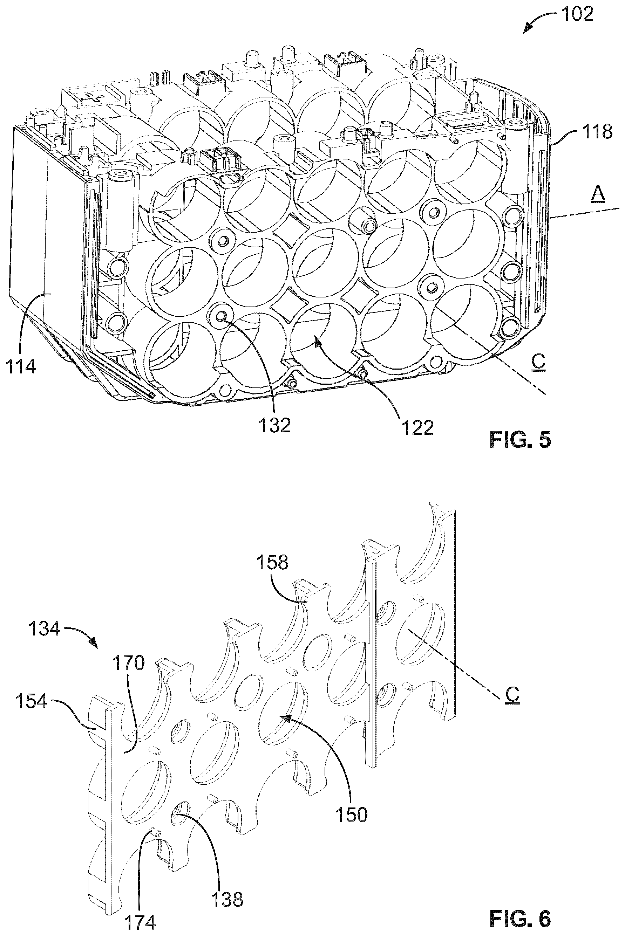

With reference to FIG. 5, the cell carrier 102 forms a portion of the housing 14. Specifically, the cell carrier 102 includes a first wall 114 and a second wall 118 spaced apart from the first wall 114 along the central axis A. The first wall 114 and the second wall 118 form a portion of the sidewalls 34 of the housing 14. The cell carrier 102 may be comprised of a hard plastic suitable for long-term durability. The cell carrier 102 includes a plurality of openings 122 between the first wall 114 and the second wall 118. The openings 122 receive the battery cells 18 along a battery axis C perpendicular to the central axis A. In the illustrated embodiment, the cell carrier 102 is configured to receive fifteen (15) cylindrical lithium-ion batteries having a positive and a negative electrical terminal 124 (See FIG. 3). In other embodiments, the cell carrier 102 may receive any number, size, and/or type of battery. Accordingly, the openings 122 form a cylindrical cross-section to accommodate the cylindrical battery cells 18. The battery cells 18 extend from a first end 126 to a second end 130 spaced apart from the first end 126 along the battery axis C (see Fig. 2). The battery cells 18 define a first length and the openings 122 define a second length less than the first length. Accordingly, the first end 126 and the second end 130 of the battery cells 18 project out from the openings 122 of the cell carrier 102. The cell carrier 102 includes a plurality of fastener holes 132 positioned between the plurality of openings 122.

With reference to FIG. 6, the battery pack 10 includes a panel 134 for positioning the battery cells 18 in the openings 122 of the cell carrier 102. In the illustrated embodiment, the battery pack 10 includes two (2) panels 134 positioned on either side of the cell carrier 102 along the battery axis C. In other embodiments, the cell carrier 102 may include any number of panels 134 and/or either side may include two or more panels 134. The panels 134 on either side are substantially similar in layout and operation. As such, only one panel 134 will be described in detail herein. The panel 134 includes a plurality of fastener holes 138 that align with respective fastener holes 132 of the cell carrier 102. After the battery cells 18 are positioned in the openings 122, the panel 134 is fastened to the cell carrier 102 by a plurality of fasteners 146 (See FIG. 3). In the illustrated embodiment, the panel 134 is comprised of the same material as the cell carrier 102. In other embodiments, the panel 134 and the cell carrier 102 may be different materials.

The panel 134 includes a corresponding plurality of openings 150 to align with the openings 122 of the cell carrier 102. Each corresponding opening 150 includes a projection 154 extending towards the central axis A of the battery pack 10. The projection 154 engages the openings 122 on the cell carrier 102. The projection 154 is configured to support the first end 126 or the second end 130 of the battery cells 18 projecting out from the openings 122 of the cell carrier 102.

The corresponding openings 150 of the panel 134 include a circular abutment 158 extending radially inward toward the battery cell axis C. The abutment 158 may extend around the entire corresponding opening 150 (e.g., 360 degrees) or around a portion of the corresponding opening 150 (e.g., less than 360 degrees). Each battery cell 18 defines a first diameter D1 and each abutment 158 defines a second diameter D2 less than the first diameter D1 (See FIG. 3). Therefore, the positive and negative electrical terminals 124 of the battery cells 18 engage the abutment 158 without passing through the corresponding opening 150. The abutment 158 prevents the axial movement (e.g., along the battery cell axis C) of the battery cells 18 when the panel 134 is fastened to the cell carrier 102.

Between each corresponding opening 150 on the panel 134 is a plurality of ribs 170 connecting the corresponding openings 150 to another corresponding opening 150. The ribs 170 include a plurality of protrusions 174 extending outward from the panel 134 away from the central axis A. The panel 134 is configured to be positioned between the cell carrier 102 and the weld strap 110 to provide hanging support to the weld strap 110 via the protrusions 174.

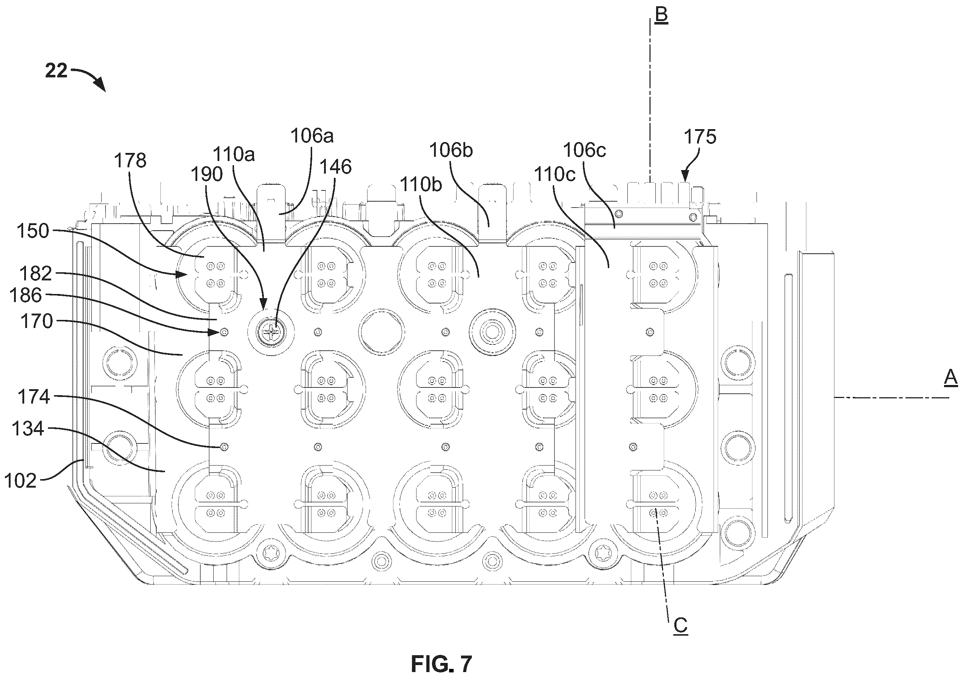

With reference to FIG. 7, the weld strap 110 is used to electrically connect a plurality of the battery cells 18. In the illustrated embodiment, the battery pack 10 includes a first weld strap 110a, a second weld strap 110b, and a third weld strap 110c (e.g., with a mirrored design on the opposing side of the cell carrier 102). In other embodiments, the battery pack 10 may include any number of weld straps 110. The first weld strap 110a and the second weld strap 110b electrically connect six (6) battery cells 18 together. The third weld strap 110c electrically connects three (3) battery cells 18 together.

Each weld strap 110 draws electricity from the connected battery cells 18 and supplies the electricity to the PCB 98 via a first arm 106a, a second arm 106b, and a third arm 106c, respectively. In the illustrated embodiment, the third arm 106c differs from the first and second arm 106a, 106b in that the third arm 106c includes a plurality of auxiliary arms 175 configured to be electrically connected to a fuse 176 (See FIG. 4) on the PCB 98. The PCB 98 selectively supplies the electricity to the electrical contacts 42 in the tower 38 to provide power to the electronic device. In the illustrated embodiment, the weld strap 110 is comprised of a single layered 0.25 mm (0.0098 inch) thick nickel-plated copper. In other embodiments, the weld strap 110 may include multiple layers and may be comprised of any thickness or material.

The weld strap 110 includes a plurality of contact elements 178 electrically coupled to the positive and negative electrical terminals 124 of each battery cell 18 at a point inside the corresponding openings 150. Positioned between each contact element 178 is a rib 182 corresponding to the ribs 170 on the panel 134. Each rib 182 of the weld strap 110 includes an aperture 186. The aperture 186 is configured to receive the protrusions 174 of the panel 134. By aligning the apertures 186 of the weld strap 110 with the protrusions 174, the weld strap 110 is supported along the axis B. During construction of the battery pack 10, the protrusions 174 hold the weld strap 110 in place prior to the contact elements 178 being welded to the electrical terminals 124 of the battery cell 18. In the illustrated embodiment, the contact elements 178 are resistance welded to the battery cells 18. In other embodiments, the contact elements 178 may be welded to the battery cells 18 using any welding method (for example, but not limited to, laser welding). The weld strap 110 may include a fastener aperture 190 to allow access to the fastener 146 coupling the panel 134 to the cell carrier 102.

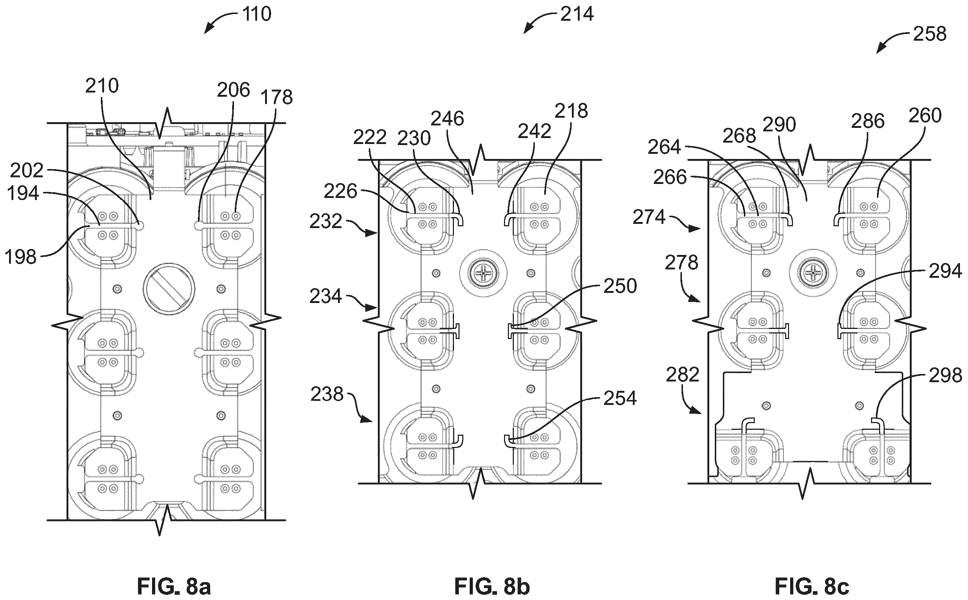

FIG. 8a illustrates the weld strap 110, according to the illustrated embodiment. Each contact element 178 includes a weld line 194 extending from a first end 198 to a second end 202 spaced apart from the first end 198 along the central axis A of the battery pack 10. The weld line 194 is an opening in the contact element 178 that allows the welding of the contact element 178 to the electrical terminal 124. The second end 202 of the weld line 194 is a circular aperture 206 positioned on a body 210 of the weld strap 110. Each weld line 194 of weld strap 110 is identical for each contact element 178 coupled to the electrical terminal 124 of the battery cell 18.

FIG. 8b illustrates another embodiment of a weld strap 214 similar to the weld strap 110, with the differences explained below. The weld strap 214 includes a plurality of contact elements 218 configured to be coupled to the electrical terminals 124 of the battery cells 18. Each contact element 218 includes a weld line 222 extending through the contact element 218 from a first end 226 to a second end 230 spaced apart from the first end 226 along the central axis A of the battery pack 10. The weld strap 214 includes a first pair of contact elements 232, a second pair of contact elements 234 spaced apart from the first pair of contact elements 232, and a third pair of contact elements 238 spaced apart from second pair of contact elements 234. The second end 230 of the weld line 222 of the first pair of contact elements 232 defines a first arcuate aperture 242. The first arcuate aperture 242 is positioned on a body 246 of the weld strap 214 and slopes away from the PCB 98. The second end 230 of the weld line 222 of the second pair of contact elements 234 defines a T-shaped aperture 250 on the body 246 of the weld strap 214. The second end 230 of the weld line 222 of the third pair of contact elements 238 defines a second arcuate aperture 254. The second arcuate aperture 254 is positioned on the body 246 of the weld strap 214 and slopes towards the PCB 98.

FIG. 8c illustrates another embodiment of a weld strap 258 similar to the weld strap 110, with the differences explained below. The weld strap 258 includes a plurality of contact elements 260 configured to be coupled to the electrical terminals 124 of the battery cells 18. Each contact element 260 includes a weld line 264 extending through the contact element 260 from a first end 266 to a second end 268 opposite the first end 266. The weld strap 258 includes a first pair of contact elements 274, a second pair of contact elements 278 spaced apart from the first pair of contact elements 274, and a third pair of contact elements 282 spaced apart from second pair of contact elements 278. The weld line 264 of the first pair and the second pair of contact elements 274, 278 generally extends along (e.g., parallel with) the central axis A. The second end 268 of the weld line 264 of the first pair of contact elements 274 define a first arcuate aperture 286. The first arcuate aperture 286 is positioned on a body 290 of the weld strap 258 and slopes away from the PCB 98. The second end 268 of the weld line 264 of the second pair of contact elements 278 defines a T-shaped aperture 294 on the body 290 of the weld strap 258. The weld line 264 of the third pair of contact elements 282 generally extends perpendicular (e.g., along the axis B) to the weld line 264 of the first and second pair of contact elements 274, 278. The second end 268 of the weld line 264 of the third pair of contact elements 282 defines a second arcuate aperture 298. The second arcuate aperture 298 is positioned on the body 290 of the weld strap 258. The second arcuate aperture 298 slopes generally parallel with the PCB 98 towards the opposing contact element in the third pair of contact elements 282.

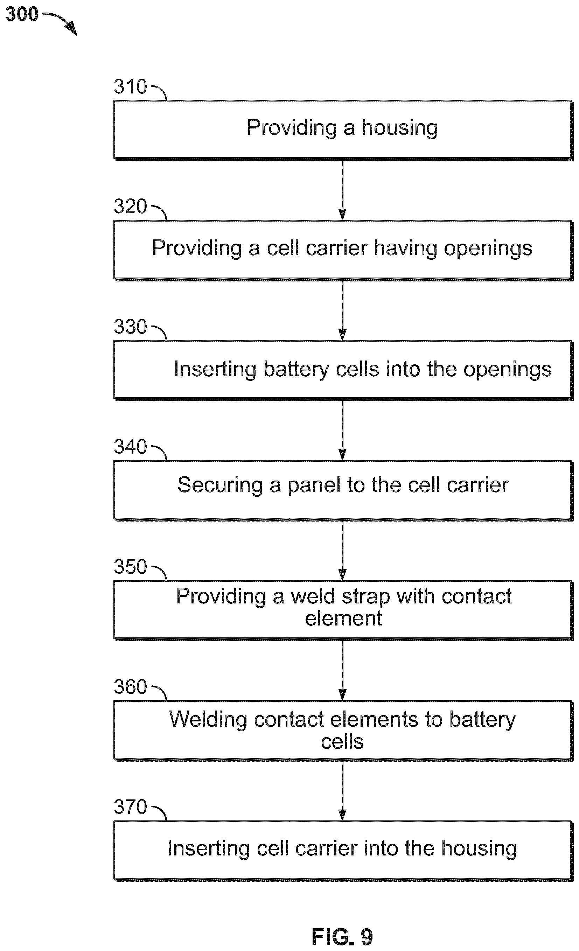

FIG. 9 provides an example method 300 for manufacturing the battery pack 10 in accordance with some embodiments. The steps of the method 300 are described in an iterative manner for descriptive purposes. Various steps described herein with respect to the method 300 are capable of being executed simultaneously, in parallel, or in an order that differs from the illustrated serial and iterative manner of execution.

At block 310, the housing 14 is provided having an interface for receiving the electronic device. For example, the interface is the tower 38 extending from the connection portion 26. The tower 38 is positioned in the battery pack receptacle for the electronic device. At block 320, the cell carrier 102 is provided and includes the plurality of openings 122. At block 330, the battery cells 18 are inserted into the openings 122. For example, the battery cells 18 have electrical terminals 124 (e.g., positive and negative terminals) that extend through the openings 122.

At block 340, the panel 134 is secured to the cell carrier 102. The panel 134 is positioned between the weld strap 110 and the cell carrier 102. The panel 134 is configured to align the electrical terminals 124 of each battery cell 18 within the respective openings 122. For example, the panel is secured to the cell carrier 102 by a plurality of fasteners. The panel 134 includes ribs 170 and protrusions 174 extending from the ribs 170. The protrusions 174 are configured to extend through the weld strap 110 to maintain a separation between each contact element 178. In some embodiments, the method 300 includes the step of positioning the plurality of protrusions 174 through the apertures 186 of the weld strap 110 to maintain separation between each contact element 178.

At block 350, the weld strap 110 is provided with the plurality of contact elements 178. For example, the weld strap 110 receives electricity from the battery cells 18 via the contact elements 178. The weld strap 110 includes the plurality of apertures 186 extending through the weld strap 110.

At block 360, the contact elements 178 are welded to the electrical terminals 124 of each battery cell 18. For example, the contact elements 178 are welded to the electrical terminals 124 via contact resistance welding. At block 370, the cell carrier 102 is inserted into the housing 14.

Clause 1. A battery pack comprising: a housing including an interface for receiving an electronic device; a cell carrier positioned within the housing, the cell carrier including a plurality of openings, each of the openings configured to receive one of a plurality of battery cells; a weld strap including a plurality of contact elements configured to be electrically coupled to an electrical terminal of each battery cell; a panel positioned between the weld strap and the cell carrier, the panel configured to align the electrical terminals of each battery cell within the respective openings.

Clause 2. The battery pack of clause 1, wherein the panel includes a plurality of projections extending towards the openings.

Clause 3. The battery pack of clause 2, wherein a portion of the battery cells extend through the openings, and wherein the projections engage the portion of the battery cells.

Clause 4. The battery pack of clause 1, wherein the panel includes an abutment extending radially inward towards a battery cell axis defined by the battery cells.

Clause 5. The battery pack of clause 4, wherein the battery cells engage the abutment to prevent axial movement of the battery cells about the battery cell axis.

Clause 6. The battery pack of clause 4, wherein the battery cells define a first diameter and the abutment defines a second diameter, and wherein the second diameter is less than the first diameter.

Clause 7. The battery pack of clause 1, wherein the panel includes a corresponding plurality of openings to align with the openings of the cell carrier, and wherein the contact elements are positioned in the corresponding openings to engage the electrical terminals of each battery cell.

Clause 8. The battery pack of clause 1, wherein the panel is comprised of a first material and the cell carrier is comprised of a second material, and wherein the first material is the same as the second material.

Clause 9. The battery pack of clause 1, wherein the contact elements are contact resistance welded to the electrical terminals of the battery cells.

Clause 10. A battery pack comprising: a housing including an interface for receiving an electronic device; a cell carrier positioned within the housing, the cell carrier including a plurality of openings, each of the openings configured to receive one of a plurality of battery cells; a weld strap including a plurality of contact elements configured to be electrically coupled to an electrical terminal of each battery cell; a panel positioned between the weld strap and the cell carrier, the panel includes a plurality of ribs and a plurality of protrusions extending from the ribs, the protrusions extend through the weld strap to maintain a separation between each contact element.

Clause 11. The battery pack of clause 10, wherein the panel includes a plurality of corresponding openings configured to align with the opening of the cell carrier, and wherein the ribs are positioned between the corresponding openings.

Clause 12. The battery pack of clause 10, wherein the weld strap includes a plurality of apertures extending through the weld strap, and wherein the protrusions are configured to extend through the apertures.

Clause 13. The battery pack of clause 10, wherein the contact elements are welded to the electrical terminals of each battery cell, and wherein the protrusions provide support for the weld strap prior to welding.

Clause 14. The battery pack of clause 10, wherein the panel includes a fastener hole extending through the ribs to align with a corresponding fastener hole on the cell carrier, and wherein a fastener is received into the fastener hole and the corresponding fastener hole to couple the panel to the cell carrier.

Clause 15. A method for manufacturing a battery pack, the method comprising: providing a housing including an interface for receiving an electronic device; providing a cell carrier having a plurality of openings; inserting a plurality of battery cells into the opening, each battery cell having electric terminals; providing a weld strap with a plurality of contact elements; securing a panel to the cell carrier, the panel positioned between the weld strap and the cell carrier, the panel configured to align the electrical terminals of each battery cell within the respective openings; welding the contact elements to the electric terminals of each battery cell; inserting the cell carrier into the housing.

Clause 16. The method of clause 15, wherein the panel includes a plurality of ribs and a plurality of protrusions extending from the ribs.

Clause 17. The method of clause 16, wherein the weld strap includes a plurality of apertures extending through the weld strap.

Clause 18. The method of clause 17, further comprising positioning the plurality of protrusions through the apertures of the weld strap to maintain a separation between each contact element.

Clause 19. The method of clause 15, wherein the contact elements are contact resistance welded to the electric terminals of each battery cell.

Clause 20. The method of clause 15, wherein the panel is secured to the cell carrier via a fastener extending through the panel and into the cell carrier.

Various features of the invention are set forth in the following claims.

## Claims

1. A battery pack comprising:
a housing including an interface for receiving an electronic device;
a cell carrier positioned within the housing, the cell carrier including a plurality of openings, each of the openings configured to receive one of a plurality of battery cells;
a weld strap including a plurality of contact elements configured to be electrically coupled to an electrical terminal of each battery cell;
a panel positioned between the weld strap and the cell carrier, the panel configured to align the electrical terminals of each battery cell within the respective openings.

2. The battery pack of claim 1, wherein the panel includes a plurality of projections extending towards the openings, wherein preferably a portion of the battery cells extend through the openings, and wherein the projections engage the portion of the battery cells.

3. The battery pack of either claim 1 or claim 2, wherein the panel includes an abutment extending radially inward towards a battery cell axis defined by the battery cells.

4. The battery pack of any one of the previous claims, wherein either or both of:
a) the battery cells either engage the abutment to prevent axial movement of the battery cells about the battery cell axis; and/or
b) the battery cells define a first diameter and the abutment defines a second diameter, and wherein the second diameter is less than the first diameter.

5. The battery pack of any one of the previous claims, wherein the panel includes a corresponding plurality of openings to align with the openings of the cell carrier, and wherein the contact elements are positioned in the corresponding openings to engage the electrical terminals of each battery cell.

6. The battery pack of any one of the previous claims, wherein the panel is comprised of a first material and the cell carrier is comprised of a second material, and wherein the first material is the same as the second material.

7. The battery pack of any one of the previous claims, wherein the contact elements are contact resistance welded to the electrical terminals of the battery cells.

8. A battery pack, in particular the battery pack of any one of the previous claims, comprising:
a housing including an interface for receiving an electronic device;
a cell carrier positioned within the housing, the cell carrier including a plurality of openings, each of the openings configured to receive one of a plurality of battery cells;
a weld strap including a plurality of contact elements configured to be electrically coupled to an electrical terminal of each battery cell;
a panel positioned between the weld strap and the cell carrier, the panel includes a plurality of ribs and a plurality of protrusions extending from the ribs, the protrusions extend through the weld strap to maintain a separation between each contact element.

9. The battery pack of any one of the previous claims, in particular claim 8, wherein the panel includes a plurality of corresponding openings configured to align with the opening of the cell carrier, and wherein the ribs are positioned between the corresponding openings.

10. The battery pack of any one of the previous claims, in particular either of claims 8 or 9, wherein the weld strap includes a plurality of apertures extending through the weld strap, and wherein the protrusions are configured to extend through the apertures.

11. The battery pack of any one of the previous claims, in particular any one of claims 8 to 10, wherein the contact elements are welded to the electrical terminals of each battery cell, and wherein the protrusions provide support for the weld strap prior to welding.

12. The battery pack of any one of the previous claims, in particular any one of claims 8 to 11, wherein the panel includes a fastener hole extending through the ribs to align with a corresponding fastener hole on the cell carrier, and wherein a fastener is received into the fastener hole and the corresponding fastener hole to couple the panel to the cell carrier.

13. A method for manufacturing a battery pack, the method comprising:
providing a housing including an interface for receiving an electronic device;
providing a cell carrier having a plurality of openings;
inserting a plurality of battery cells into the opening, each battery cell having electric terminals;
providing a weld strap with a plurality of contact elements;
securing a panel to the cell carrier, the panel positioned between the weld strap and the cell carrier, the panel configured to align the electrical terminals of each battery cell within the respective openings;
welding the contact elements to the electric terminals of each battery cell;
inserting the cell carrier into the housing.

14. The method of claim 13, wherein the panel includes a plurality of ribs and a plurality of protrusions extending from the ribs, wherein the weld strap preferably includes a plurality of apertures extending through the weld strap and/or the method further comprises positioning the plurality of protrusions through the apertures of the weld strap to maintain a separation between each contact element.

15. The method of either of claims 13 or 14, wherein the contact elements are contact resistance welded to the electric terminals of each battery cell, and/or wherein the panel is secured to the cell carrier via a fastener extending through the panel and into the cell carrier.
